# EUROPEAN PATENT SPECIFICATION

(11) **EP 1 428 692 B1**
(45) Date of publication and mention of the grant of the patent: **19.03.2008**
(21) Application number: 03017028.6
(22) Date of filing: 28.07.2003
(51) Int. Cl.: B60C 23/00

(54) **A device for surveying the radial deformation state of a tire**
Vorrichtung zur Überwachung des Zustandes der radialen Deformation eines Luftreifens
Dispositif de surveillance de l'état de déformation radiale d'un pneumatique

(30) Priority: 12.12.2002 IT BO20020782
(43) Date of publication of application: 16.06.2004
(73) Proprietor: Barbanti, Giovanni, 40033 Casalecchio di Reno (Bologna) (IT)
(72) Inventor: Barbanti, Giovanni, 40033 Casalecchio di Reno (Bologna) (IT)
(74) Representative: Rinaldi, Carlo

(56) References cited:
- EP-A- 0 893 284
- US-A- 3 451 418
- US-A- 4 737 760
- US-A- 5 325 808

## Description

### BACKGROUND OF THE INVENTION

The present invention refers to a device capable of surveying the radial deformation condition of a tire. In particular, said invention relates to an industrialised embodiment resulting suitable for mass production of the device also presenting particular solutions for the employment safety of said device.

### PRIOR ART

EP-A 0 893 284 of applicant discloses a surveying device comprising a sensor capable of identifying the difference between the pressure of the gas inside the tire and the environmental pressure, and of externally signalling when this difference in pressure decreases under a pre-established threshold value. This device is not used for automatic and cheap mass production and it does not present systems assuring the employment safety in any dynamic condition.

US-A-3,451,418 relates to a device for indicating the interior pressure of a pneumatic tire. This device is adapted to be mounted on a pneumatic tire to indicate the interior pressure thereof and which permits a compressed air to be charged in said pneumatic tire there through without being removed from the tire.

The device comprises a hollow body, inflatable means disposed in the hollow body and means maintaining the air valve of said pneumatic tire in a normally closed open position. The interior pressure of the tire is in communication with the interior of the inflatable means. Means automatically indicating the interior pressure of the tire at any given moment of time are further provided. The device is secured to the air valve of the tire and is capable of having compressed air charged directly there through for inflating the tire. In addition, means for automatically closing the air valve of the tire are provided, said means acting when the interior pressure of tire has dropped below a predetermined value.

US-A-4,737,760 relates to a tire pressure warning device.

This device comprises a body adapted to be threaded into the valve steam of a tire, a pressure sensing valve in the body, and a compression spring acting on the sensing valve to open it when the pressure in the tire is below a predetermined value. An alarm in the body is provided being adapted to produce an audible signal in response to air flow through the sensing valve. The body includes a distendable diaphragm as a pressure sensor and a compression spring for closing a switch when the air pressure is below a predetermined value. A radio transmitter in the body transmits a warning signal when the switch is closed. A monitor detects a transmitted audio or radio signal and compares it with a stored reference signal and produces an output signal only when the transmitted signal corresponds to the stored signal.

US-A-5,325,808 discloses a filler and pressure indicator valve.

The indicator valve presents a housing with a main valve openable upon depression by a conventional filler tool upon adding air to the tire and automatically closeable upon release of the tire filling tool. A shaft is slidable through the main valve and on the inner and of the shaft there is a sensor valve. The sensor valve is normally closed but response to a low pressure condition within the tire to open, moving the shaft inwardly and releasing a pop-up cap on the end of the shaft to trigger a visual sensor element. The device can be adjusted to settings for different desired air pressure levels below which the sensor valve will be actuated.

In these and other available prior art documents first axial helical profiles are not provided resting on homologous axial helical profiles found on the base of an envelope and capable of sliding on them when a proper high screwing torque is applied to the envelope. Second side axial profiles engages homologous axial profiles found on the base of the envelope when an unscrewing torque is applied to it.

So doing, it is possible to transmit a torque in both directions between the envelope and the cylindrical member, which can axially translate inside the hollow found on the base of the threaded body and of the envelope against the force of the spring.

Neither cylindrical surfaces delimiting a zone having an internal diameter shorter than the one of the internal cylinder of a sleeve are provided in the available prior art documents as well as the protuberances having an axial extension limited according to the stroke available for the group sensor/amplifier/transducer /actuator/ inside the chamber in order to allow the disengaging of the protuberances from an open elastic ring when said group is in contact with the wall.

### AIMS AND FEATURES OF THE INVENTION

The purpose of the invention is to remedy these defects. The invention, as claimed, solves the problem of creating a device for surveying the radial deformation condition of a tire. By using the present invention the purpose is reached consisting of measuring the radial deformation state of a loaded tire since said deformation is proportional to the difference between the pressure of the gas inside the tire and the environmental pressure.

A second purpose of the invention is to signal to the external when the difference between the pressure of the gas inside the tire and the environmental pressure decreases under a pre-established threshold value. A further aim is to supply the device with apparatuses assuring the employment safety in every dynamic condition.

A device according to the present invention comprises an envelope and a threaded body connected each other,
a group freely and axially moving inside the envelope with respect to the threaded body,
the group comprising at least a sensor, an amplifier, a transducer and an actuator,
a spring pushing the group towards the end of the envelope distal with respect to the tire,
a gasket integral with the threaded body,
a valve for inflating the tire containing a body fixed by means of a sealing threaded connection, a self-closing member with a sealing gasket sliding inside the threaded connection, hold by a spring in a closing position,
an end of the valve presenting a chamber connected to the internal part of the tire when the self-closing member is open;
the gasket closing the connection between the chamber and the atmosphere when the threaded body is clamped on the valve;
the gasket is clamped by the threaded body by screwing the threaded body until abutting on the external thread of the valve;
a screw mechanism is provided causing the translation of the external envelope with respect to the valve and the threaded body towards the internal part of the tire, the displacement of the group until abutting on the threaded body and the opening of the self-closing member of the valve by means of the action of the end of the housing of the group,
an optical system is provided to signal outside that the group keeps on abutting against the threaded body when the envelope comes back to its distal position.

The screw mechanism consists of first radial protuberances finding on a cylindrical member,
the cylindrical member is integral with the threaded body,
axial helical contours are located on the first radial protuberances, said axial helical contours resting on homologous axial helical contours, integral with the envelope.

Second radial protuberances direct to the internal part of the tire are provided in the envelope, the second radial protuberances interfering with peripheral contours integral with the threaded body to prevent the axial translation of the envelope, causing the opening of the self-closing member of the valve in absence of helical movement; said axial translation is due, among other, to the centrifugal force.

The optical system uses the refraction features of the material of the wall to determine a first colouring, when the group is found far from the wall, and a second colouring, when the group is in contact with the wall.

The geometrical features of the screw mechanism prevent the relative sliding of the homologous axial helical contours until the clamping couple of the gasket, applied to the external envelope, reaches a pre-established threshold value.

The threshold value of the clamping couple of the gasket, beyond which the relative sliding of the homologous helical axial contours occurs, depends on the force of a spring pushing the envelope towards the distal position.

The spring and the geometrical of the screw mechanism realise a right threshold value of the clamping couple of the gasket.

A hindering mechanism is further provided capable of hindering the displacement of the group until the abutting with the threaded body and the opening of the self-closing member of the valve due to the action of the axial component of the centrifugal force.

The hindering mechanism comprises a groove located at the end of the threaded body, an elastic ring housed by groove,
the groove is shaped in order to prevent the axial coming out of the ring,
a sleeve is situated between the spring and the group, the sleeve presenting third radial protuberances towards the inside of the tire,
the cylindrical surfaces of the third radial protuberances delimit a zone having an internal diameter shorter than the one of the internal cylinder of the sleeve,
the third radial protuberances have an axial extension limited according to the stroke available for the group in order to allow the disengaging of the protuberances from the elastic ring when the group is found in the distal position with respect to the threaded body,
radial recesses are found in the threaded body,
the radial recesses are capable of housing the third radial protuberances of the sleeve when the group towards the upper wall of the threaded body.

When the translation of the group towards the upper wall of the threaded body begins, the lower end of each radial protuberance intercepts the ring that, in its rest condition, has an external diameter longer than the one of the cylindrical surfaces,
in order to continue the translation it is necessary an additional axial pushing on the sleeve with respect to the one which exceeds the pushing of the spring, said pushing being capable of overcoming the elastic resistance of the ring and causing the decreasing of the diameter up to allow the passage of the protuberances.

The obtained additional axial pushing acting on the sleeve exceeds the action of the axial component of the centrifugal force on the group and on the envelope.

### BRIEF DESCRIPTION OF THE DRAWINGS

Other advantages, features and aims of the invention, may be more readily understood by referring to the accompanying drawings, which concern preferred embodiments, in which:
- Fig. 1 shows an axial section of a device according to the present invention in loading condition;
- Fig. 2 represents an axial section of a device according to the present invention in unloading condition;
- Fig. 3 is a perspective view of some internal members of the device;
- Fig. 4 is a sectional view of an internal member of the device;
- Fig. 5 is a perspective of some internal members of the device;
- Fig. 6 is a sectional view of some internal members of the device;
- Fig 7 shows the action of the centrifugal force on the group sensor/amplifier/transducer /actuator and on the external envelope.

### DESCRIPTION OF A PREFERRED EMBODIMENT OF THE INVENTION

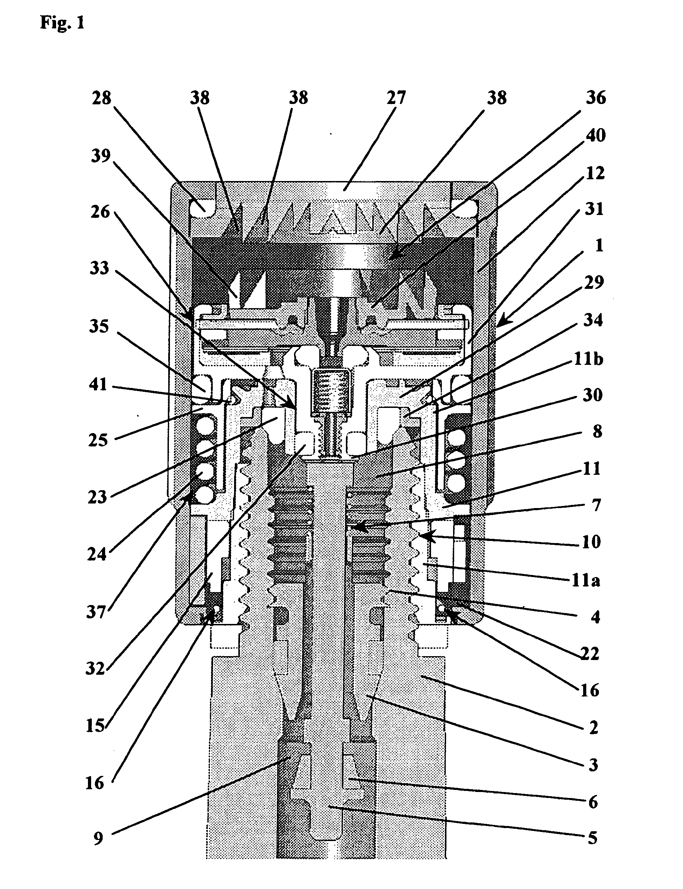

Fig. 1 shows the device (1) mounted on an usual inflating valve for tires. Said valve substantially consists of a metal tube (2) containing a body (3) the internal of which is fixed by means of a sealed threaded connection (4) in which a self-closing closure member (5) slides. Said member (5), having a sealing gasket (6), is maintained in closing position by a spring (7). The closure member (5) is capable of automatically opening when the pressure, acting on its part facing outside, that is in the chamber (8), multiplied by the effective surface of the sealing gasket (6), generates an axial downwards force higher than the one due to the pressure existing in its inner part, that is in the chamber (9), (inside the tire), multiplied by the efficient surface of the sealing gasket (6) plus the force of the spring (7) or, vice-versa, said closure member (5) is capable of remaining closed when the force due to the pressure in the external part (chamber (8)) is lower than the one due to the pressure existing inside the tire (chamber (9)) plus the force of the spring (7). Of course, the closure member (5) can also be opened from the external part by mechanical action by a force acting on its end and faced towards the internal part as represented in Fig. 1.

The device (1) is screwed on the valve instead of the usual protection cap. The device (1) and most of its internal components have an axial symmetrical shape. The device (1) comprises a threaded body (11) consisting of two welded parts (11a and 11b); the threaded body (11) engages the threaded end (10) of the inflating valve of the tire. An external envelope (12) is connected to the threaded body (11) through the unscrewing free tripper, surveying the maximum applied torque and generating an axial pushing as below disclosed. The unscrewing function is also used as anti-sabotage and anti-theft.

Said devices form an unidirectional free tripper, allowing the transmission of a torque between the envelope (12) and the threaded body (11) in the screwing direction only. So doing, when the closure of the whole system is completed and a sufficient clamping torque (capable of contrasting an unscrewing torque) is assured and controlled through apparatuses, as below disclosed, it is impossible to unscrew the system from the valve since the unscrewing torque applied to the envelope (12) cannot be transmitted to the threaded body (11).

The clamping is necessary to avoid the system can be unscrewed and lost during the movement of the vehicle because of the external forces and vibrations and, moreover, it is necessary to assure the efficiency of the functions to be carried out.

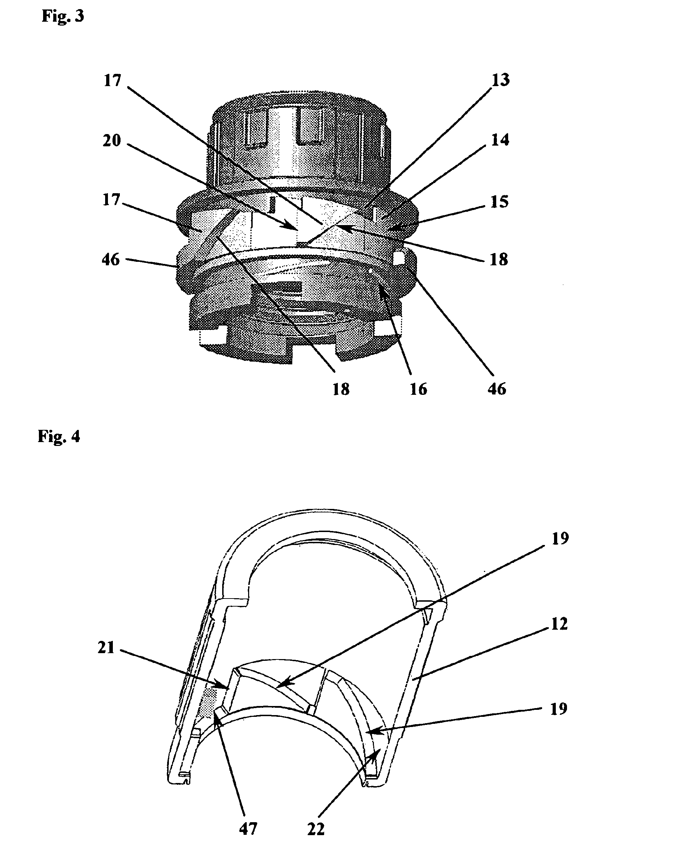

According to a preferred embodiment as shown in Fig. 3, front teeth (13), that is parallel to the axis of the body, obtained on the external circumference of the threaded body (11), engage homologous axial front teeth (14) obtained on a cylindrical member (15) to be coaxially mounted to the threaded body (11) and capable of a so downwards axially sliding with respect to the threaded body (11) to disengage the homologous teeth, while a spring (16) causes a soft pushing upwards on the cylindrical member (15) tending to maintain the teeth (13, 14) in contact.

The cylindrical member (15) is fitted with radial protuberances (17) producing on a side axial helical profiles (18) resting on homologous axial helical profiles (19), as shown in Fig. 4, found on the base of the envelope (12) and capable of sliding on them when a proper high screwing torque is applied to the envelope (12), and on the second side axial profiles (20), engaging homologous axial profiles (21) found on the base of the envelope (12) when an unscrewing torque is applied to it.

So doing, it is possible to transmit a torque in both directions between the envelope (12) and the cylindrical member (15), which can axially translate inside the hollow (22) found on the base of the threaded body (11) and of the envelope (12) against the force of the spring (16).

Applying a screwing torque on the envelope (12), said torque is also transmitted to the cylindrical member (15), the axial teeth of which (14) engage the homologous axial teeth (13) of the threaded body (11). So doing, the screwing torque is transmitted to the threaded body (11) screwing up to the whole clamping on the end (10) of the valve.

The clamping of the system on the valve is correctly reached when said clamping is carried out by a not excessive, sufficient and proper final torque. Both in case of manual screwing of the system on the end of the inflating valve of the tire and, above all, in case of using of tools or ancillary equipment for applying a higher clamping torque, the risk is to apply a too much high torque which can damage the system and/or a sealing gasket (23) located between the threaded body (11) and the end (10) of the valve.

But an excessive clamping torque is not the only problem: also an insufficient clamping torque can result dangerous, since it makes the sealing gasket (23) inefficient and it can just cause the unexpected, even whole, unscrewing of the system because of the vibrations due to the movement of the vehicle.

For this reason, the system is suitable for assuring, even in case of using by a no skilled person without adequate tools (and, therefore, not able to verify if the applied screwing torque is sufficient for the purpose), the efficient and full clamping of the threaded members (11, 10) and of the gasket (23).

In the meantime, it can be suggested a solution which assures the full and efficient clamping of the threaded body on the valve, and, therefore, capable of advising the executor of the operation when a screwing torque having a proper and sufficient value for the purpose is obtained, said solution being capable of avoiding an excessive clamping by the application of a screwing torque having a value higher than the proper and sufficient value for the purpose.

In order to find the above mentioned solution it is suggested, for example, to apply a kind of screwing torque limiting system acting from the external envelope (12) to the threaded body (11) through the free tripper as shown above.

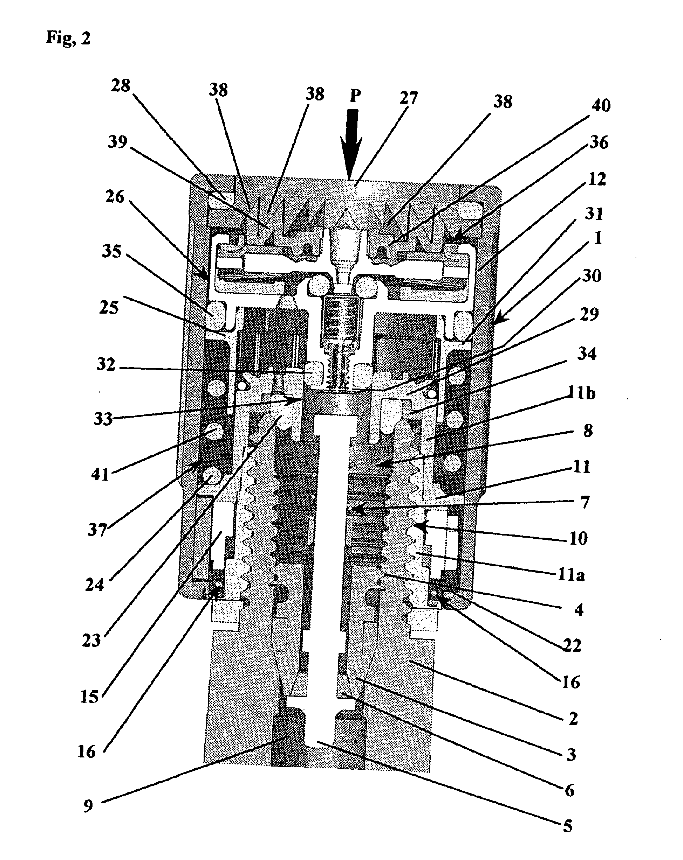

The torque limiting system is obtained by the coupling of the axial helical profiles (18) and the homologous axial helical profiles (19), capable of sliding on them when a sufficiently high screwing torque is applied to the envelope (12) and capable of generating a component of axial pushing P on the envelope (12) (Fig. 2), the value of which is higher than the upwards pushing due to a spring (24). The spring (24) is located between the threaded body (11) and a centring sleeve (25) by means of which the spring (24) pushes upwards the sensor/amplifier/transducer/actuator group (26) which, before the screwing clamping manoeuvre of the system (1) on the valve, is unloaded and, therefore, rests on the upper wall (27) at the end opposite to the threaded body (11) and rigidly fixed to the envelope (12). The sealing is obtained by means of a gasket (28) located between the end of the envelope (12) and an abutting on the wall (27).

When the screwing torque applied to the envelope (12) is sufficiently high to generate the component of axial pushing P on the envelope (12) having a value higher than the upwards pushing due to the spring (24), any further increasing of the applied torque causes a helical movement of the envelope (12) which slides towards the valve (2) and, at the same time, causes a pushing from the wall (27) to the sensor/amplifier/transducer/actuator group (26) which, in its turn, presses the spring (24).

The pushing of the wall (27) on the group (26) causes the translation of the same system towards the upper wall (29) of the threaded body (11) until the abutting. During the descent the lower end (30) of the housing (31) of the group (26) pushes the closure member (5) towards the inside of the valve (2) against the forces of the spring (7) and of the gas pressure of the tire on the efficient section of the gasket (6), and connects the chamber (9) joined to the inside of the tire to the chamber (8) delimited by the end (10) of the valve (2), the upper wall (29) of the threaded body (11), the gasket (23) and by a gasket (32) obtaining the sealing between the lower end (30) of the housing (31) of the group (26) and the cylindrical hollow (33) found on the upper wall (29) of the threaded body (11).

The gasket (6) is open until the group (26) is displaced towards the threaded body (11), while it automatically closes when the group (26) is far from the threaded body (11).

The group (26) contains apparatuses suitable for the measuring, amplifying and transducing the signal due to the difference between the gas pressure inside the tire and the environmental pressure and signalling when the pre-established threshold is exceeded.

These apparatuses are technically equivalent to the ones described in EP-A 0 893 284, therefore, in order to better understand said apparatuses please read this text.

An annular gasket (35) separates the chamber (36), located between the wall (27) and the group (26), from the chamber (37) located between the centring sleeve (25) and the environment, the chamber (37) communicating with the environment through a not shown hole at the basis of the threaded body (11). This gasket (35) co-operates with the spring (24) in order to realise the same function of the bellows of EP-A 0 893 284.

The screwing torque applied on the envelope (12) causes the screwing and the system closure (1) on the threaded end (10) of the valve (2) before, and then it causes the helical movement of the envelope (12), the wall (27) of which generates a pushing on the nearest part of the group (26) in order to reach the loading of the device according to EP-A 0 893 284.

The unscrewing of the system (1) acting on the envelope (12) is prevented by the free tripper if the threaded body (11) is closed during the screwing causing a clamping torque higher than the torque which can be transmitted in screwing direction that is very low but it exists. In order to assure a higher clamping torque, in addition to the usual friction between the two parts, which are fixed by the threading when, both ends are in abutting, further devices can be used, as for example:
Using self-closing technologies of the threaded body (11) on the male thread (10), as for a partial deformation of the female thread of the threaded body (11) or the interposition, at the upper end of the threaded body (11), of a deforming component capable of causing a strong friction torque on the threading (10), as used for self-closing nuts (See Filippi, Disegno di Macchine, Vol. II, Hoepli for some known examples, neither limiting nor exhaustive);
Using further components allowing a strong friction and an high clamping torque between the two parts (11, 10) fixed together, as for example elastic washers like UNI 1751 e 1752 o DIN 128, corrugated or knurled elastic washers, plane or conical elastic washers with toothing according to UNI 3703, 3704, 3705, 3706, etc (See Filippi), which can be applied at the end stop of the male thread (10) in order to avoid any damage to the male thread.

The elastic washer (34) located between the end (10) of the valve (2) and the upper wall (29) of the threaded body (11) carries out the same function.

The external contour of the envelope (12) in the clamping zone for the torque (either manually or by using proper tools or manoeuvring keys) has a cylindrical shape or shapes more suitable for a better clamping and a better transmission of the torque, as for example knurling, grooved or polygonal contours.

The wall (27) is made of transparent material, but its internal contour is shaped by concentric diggings (38) having geometrical features, with respect to the index of refraction of the used material, causing from an external view a neutral colouring when the group (26) is far from the wall (27), Fig. 1, and vice versa a bright colouring according to the tonality of a component (39), shaped with concentric protuberances (40) capable of introducing with precision inside the diggings (38) of the inner part of the wall (27) when the group (26) is found in condition shown in Fig. 2. So doing, the position of the group (26) is signalled to the external part since the neutral colouring corresponds to the system loading, while the bright colouring corresponds to the unloading according to EP-A 0 893 284.

The sleeve (25) supports the group (26), to which transmits the pushing of the spring (24). An apparatus is provided suitable to prevent the translation of the group (26) from the unloading condition of Fig. 2 in which it is fixed to the wall (27) towards the upper wall (29) of the threaded body (11) because of the centrifugal force due to the rotation of the wheel, said force acting on the group (26) and on the envelope (12).

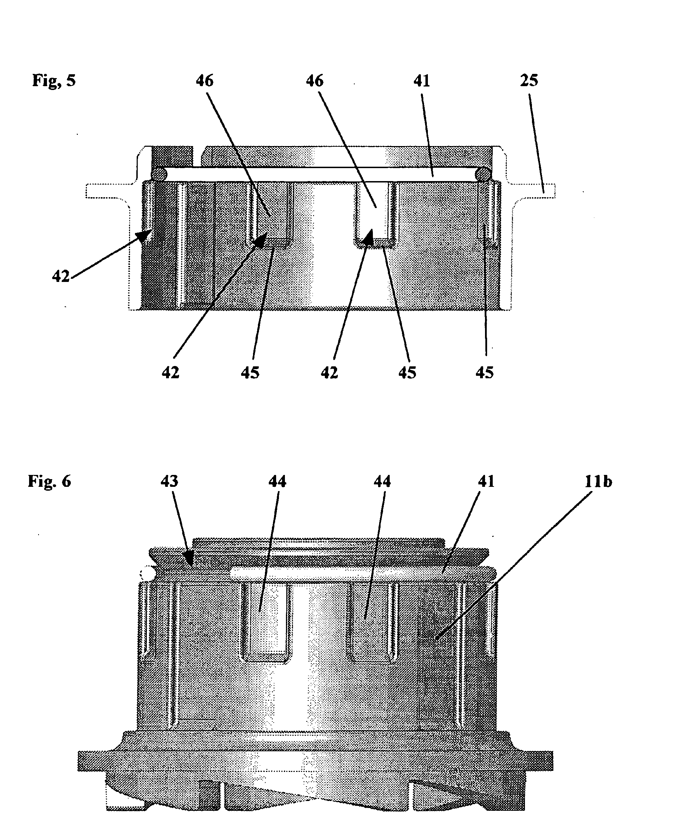

The apparatus is better shown in Figs 5, 6. The sleeve (25) of Fig 5 presents radial protuberances (42) towards the inside, the cylindrical surfaces (46) of which delimit a zone having an internal diameter shorter than the one of the internal cylinder of the sleeve (25). The protuberances (42) have an axial extension limited according to the stroke available for the group (26) inside the chamber (36), in order to allow the disengaging of the protuberances from an open elastic ring (41) when the group (26) is in contact with the wall (27). The elastic ring (41) is found inside a groove (43) being in the upper part of the threaded body (11b) shaped in order to prevent the axial coming out of the ring (41). Radial recesses (44) are found in the threaded body (11b), said recesses capable of housing the radial protuberances (42) of the sleeve (25) when the group (26) translates towards the upper wall (29) of the threaded body (11).

When the translation of the group (26) towards the upper wall (29) of the threaded body (11) begins, the lower end (45) of each radial protuberance (42) intercepts the ring (41) which, in its rest condition, has an external diameter longer than the one of the cylindrical surfaces (46). In order to continue the translation, it is necessary an additional axial pushing on the sleeve (25) with respect to the one which exceeds the pushing of the spring (24), said pushing being capable of overcoming the elastic resistance of the ring (41) and causing the decreasing of the diameter up to allow the passage of the protuberances (42).

If the action of the centrifugal force on the group (26) and on the envelope (12) is lower than the additional pushing the translation of the group (26) is stopped. The elastic reaction of the ring (41) and the shaping of the radial protuberances (42), and in particular of their lower ends (45), are so planed to cause the stopping of the translation of the group (26) and the envelope (12) due to the action of the centrifugal forces also very high with respect to the speed of the vehicle.

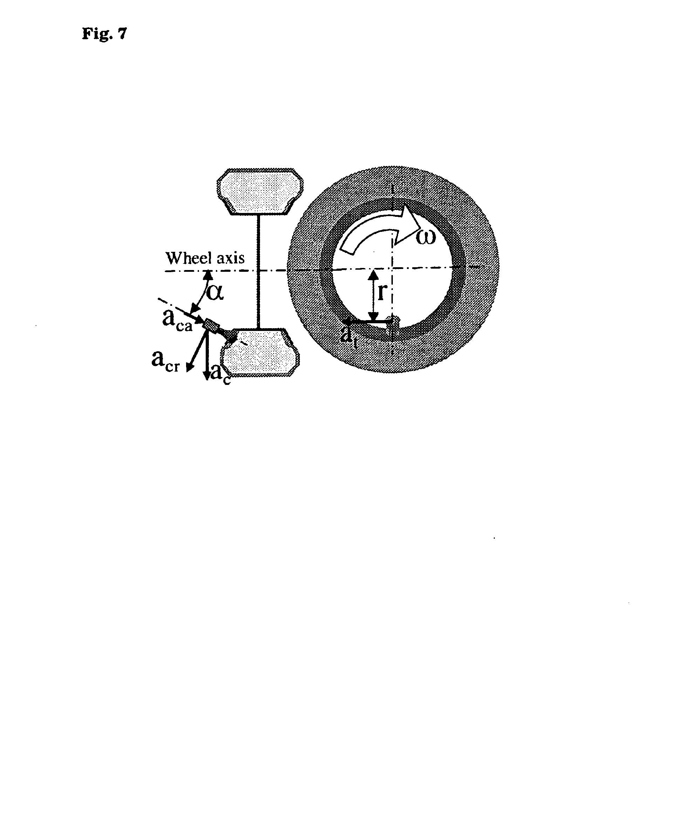

A stopping of the descent of the envelope (12) in case of translation without helical movement, as in case of action due to the centrifugal force only, is then realised by means of further radial protuberances found on the external contour of the cylindrical member (15) extending the basis of the protuberances (17), as shown in Fig 3, by peripheral contours (46). In the envelope (12) radial protuberances (47) towards inside are found (Fig 4), which interfere with the peripheral contours (46) in case of translation of the envelope (12) without helical movement, for example because of the centrifugal force, as shown in Fig 7.

The centrifugal force, due to the rotation of the wheel, presents a component a_{ca} pushing the device together with all its parts towards the internal part of the wheel. The push tends to cause the translation of the parts moving with respect to the envelope (12), including the group (26) and the closure member (5).

## Claims

1. A device for surveying the radial deformation of a tire, said surveying being reached by means of a measure of the relative pressure of the gas inside the tire,
the device comprising an envelope (12) and a threaded body (11, 11a, 11b) connected each other,
a group (26) freely and axially moving inside the envelope (12) with respect to the threaded body (11, 11a, 11b),
the group (26) comprising at least a sensor, an amplifier, a transducer and an actuator,
a spring (24) pushing the group (26) towards the distal end of the envelope (12) with respect to a known inflating valve of a tire, not belonging to the device,
apparatuses being contained inside the group (26),
the apparatuses being capable of performing the functions of measuring, amplifying and transducing the signal due to the difference between the pressure of the gas inside the tire and the environmental pressure, the apparatuses being also capable of signalling the exceeding of a pre-established threshold difference value,
the device being **characterised by** estimating the radial deformation state of a loaded tire, said deformation being proportional to the difference between the pressure of the gas inside the tire and the environmental pressure.

2. A device as in claim 1, wherein, for outside signalling the radial deformation state of the tire, the group (26) is found in a first distal position where the group (26) is in contact with a wall (27), and in a second proximal position where the group (26) is far from the wall (27),
the wall (27) is made of transparent material, and its internal contour is shaped by concentric diggings (38),
the geometrical features of the diggings (38), according to the refractive index of the transparent material of the wall (27), produce, from an external view, a neutral colouring when the group (26) is far from the wall (27), and vice-versa a bright colouring is obtained, according to the tonality of a component (39), when the group (26) is in contact with the wall (27),
the component is a part of the group (26),
said group (26) being shaped with concentric protuberances (40) capable of introducing with precision inside the diggings (38) of the inner part of the wall (27) when the group (26) is in contact with the wall (27).

3. A device as in claim 1, wherein, for outside signalling the radial deformation state of the tire, the group (26) reaches the first distal position because of the pushing of the spring (24), and the second proximal position by means of the action of a force acting against the pushing of the spring (24).

4. A device as in claim 3, wherein a torque applied to the envelope (12) causes a helical movement of the envelope (12) which slides towards the valve (2), and, at the same time, causes a pushing from the wall (27) to the group (26) which, in its turn, presses the spring (24).

5. A device as in claims 3 and 4, wherein a screw mechanism is provided causing the helical movement, and, therefore, the translation of the external envelope (12) with respect to the valve (2) and the threaded body (11, 11a, 11b) in direction of the valve (2),
in addition, said screw mechanism causes the displacement of the group (26) until the abutting with the threaded body (11, 11a, 11b) in direction of the valve (2), that is towards the proximal position, and the opening of the self-closing member (5) of the valve (2) due to the pushing of the end (30) of the housing (31) of the group (26).

6. A device as at least one of the previous claims, wherein the screw mechanism consists of first radial protuberances (17) obtained on a cylindrical member (15), the cylindrical member (15) being coaxial to the threaded body (11, 11a, 11b), helical contours (18) being obtained on the first radial protuberances (17), the contours (18) resting on homologous axial helical contours (19), integral with the envelope (12).

7. A device as at least one of the previous claims, wherein front teeth (13), that is parallel to the axis of the device, obtained on the on the external circumference of the threaded body (11), engage homologous axial front teeth (14) obtained on the cylindrical member (15),
the cylindrical member (15) being coaxial to the threaded body (11),
the cylindrical member (15) being capable of axially downwards sliding with respect to the threaded body (11), moving away from the external circumference and from the front teeth (13) of a quantity sufficient to disengage the homologous teeth (13, 14), while a spring (16) causes a soft pushing upwards on the cylindrical member (15) tending to maintain the teeth (13, 14) in contact.

8. A device as in claim 1, wherein a gasket (23) closes the connection between a chamber (8), communicating with the tire, when the device is in the second proximal position of the group (26), and the atmosphere when the threaded body (11, 11a, 11b) is clamped on the valve (2),
to tighten the gasket (23) by means of the threaded body (11, 11a, 11b) threaded body is screwed until abutting on the external thread (10) of the valve (2)
the gasket having the purpose of assuring safety conditions.

9. A device as in claim 1, wherein, in order to assure the safety in all dynamic conditions, second radial protuberances (47) are further provided, said protuberances (47) being turned towards the internal part of the tire,
the second radial protuberances (47) interfering with peripheral contours (46) integral with the threaded body (11, 11a, 11b) for preventing the axial translation of the envelope (12) causing the opening of the self-closing member (5) of the valve (2) in absence of helical movement; said translation is due to an external centrifugal force generated by the rotation of the wheel.

10. A device as in claim 8, wherein, to assure the right clamping of the gasket (23), the geometrical features of the screw mechanism prevent the relative sliding of the homologous axial helical contours (18, 19), until the clamping torque of the gasket (23) applied to the envelope (12) reaches a pre-established threshold.

11. A device as in claim 8, wherein the value of the threshold of the clamping torque of the gasket (23) depends on the pushing of the spring (24) moving the group (26) towards the first distal position, since the group (26) rests on the wall (27) of the envelope (12),
the relative sliding of the homologous axial helical contours (18, 19) occurring when the threshold of the clamping torque has been exceeded.

12. A device as in claim 1, wherein the spring (24) works together with the resisting screwing couple of the threaded body (11a) on the threaded end (10) of the inflating valve of the tire and with the resisting couple die to the axial compression of the gasket (23),
said resisting couple contrast the geometry of the screw mechanism, and in particular the inclination of the axial helical contours (18, 19), for reaching a right value of threshold of the clamping couple of the gasket (23) and for preventing the clamping couple from being insufficient, so that the gasket (23) does not seal, or from being excessive, so that the gasket (23) is damaged.

13. A device as in claim 1, wherein an elastic ring (41), a sleeve (25), and radial recesses (44) are further provided,
the elastic ring (41) being housed by a groove (43) obtained on the threaded body (11, 11a, 11b), the groove (43) being shaped in order to prevent the axial coming out of the ring (41),
the sleeve (25) being located between the spring (25) and the group (26), the sleeve (25) presenting third radial protuberances (42) towards the inside of the tire, the cylindrical surfaces (46) of the third radial protuberances (42) delimit a zone having an internal diameter shorter than the one of the internal cylinder of the sleeve (25), and
the radial recesses (44) being capable of housing the third radial protuberances (42) of the sleeve (25) when the group (26) slides towards proximal position, the third radial protuberances (42) having an axial extension limited according to the stroke available for the group (26) in order to allow the disengaging of the protuberances (42) from the elastic ring (41) when the group (26) is found in the distal position, for hindering the displacement of the group (26) towards the second proximal position and the opening of the self closing member (5) of the valve (2) due to the action of the axial component of the centrifugal force, since the lower end (45) of each radial protuberance (42) each radial protuberance (42) intercepts the ring (41) that, in its rest condition, has an external diameter longer than the one of the cylindrical surfaces (46),
in order to continue the translation it is necessary an additional axial pushing on the sleeve (25) with respect to the one which exceeds the pushing of the spring (24), said pushing being capable of overcoming the elastic resistance of the ring (41) and causing the decreasing of the diameter up to allow the passage of the protuberances (42), the obtained additional axial pushing acting on the sleeve (25) exceeding the action of the axial component of the centrifugal force on the group (26) and on the envelope (12).

## Patentansprüche

1. Vorrichtung zur Überwachung des Zustandes der radialen Deformation eines Luftreifens, wobei die Überwachung mittels eines Maßes des relativen Druckes innerhalb des Luftreifens erreicht wird,
die Vorrichtung enthält eine Verhüllung (2) und einen verlegten Körper (11, 11a, 11b), die miteinander verbunden sind,
eine Gruppe (26) bewegt sich innerhalb der Verhüllung (12) frei und axial in bezug auf den verlegten Körper (11, 11a, 11b),
die Gruppe (26) enthält mindestens einen Sensor, einen Verstärker, einen Signalformer und einen Auslöser,
eine Feder (24) drückt die Gruppe (26) in Richtung zum distalen Ende der Verhüllung (12) hinsichtlich eines bekannten Nadelventils eines Luftreifens, wobei das Ventil nicht der Vorrichtung gehört,
Apparate sind innerhalb der Gruppe (26) enthalten,
die Apparate sind fähig, die Funktionen von Messen, Verstärken und Überführen des Signals durchzuführen, das durch die Differenz zwischen dem Druck innerhalb des Luftreifens und den Umweltdruck verursacht wird, wobei die Apparate geeignet sind, auch das Überschreiten eines vorbestimmten Schwellenwertes zu signalisieren, und
den radialen Verformungsstand eines belasteten Luftreifens zu bewerten, wobei die Verformung proportional zu der Differenz zwischen dem Druck des Gases innerhalb des Luftreifens und dem Umweltdruck ist.

2. Vorrichtung nach Anspruch 1 **dadurch** gegenzeichnet, daß sich die Gruppe (26) in einer ersten distalen Stellung befindet, wo die Gruppe (26) in Berührung mit einer Wand (27) ist, und in einer zweiten Stellung, wo die Gruppe (26) von der Wand (27) entfernt ist, um den radialen Verformungsstand des Luftreifens ins Äußere zu signalisieren,
die Wand (27) besteht aus durchsichtigem Material und ihre interne Form wird durch konzentrische Hohlräume (38) geformt,
die geometrischen Merkmale der Hohlräume (38), entsprechend dem Brechungsindex des durchsichtigen Materials der Wand (27), erzeugt, von einer Außenansicht, einen Nullfarbton, falls die Gruppe (26) von der Wand (27) weit ist, und
umgekehrt wird ein heller Farbton, entsprechend der Tonalität eines Bestandteils (39), erreicht, falls die Gruppe (26) in Berührung mit der Wand (27) ist,
das Bestandteil (39) ist ein Teil der Gruppe (26),
die Gruppe (26) ist aus konzentrischen Vorstehen (40) gebildet, die fähig sind, sich in die Hohlräume (38) des Innenteils der Wand (27) einzuführen, falls die Gruppe (26) in Berührung mit der Wand (27) ist.

3. Vorrichtung nach Anspruch 1 **dadurch** gegenzeichnet, daß die Gruppe (26) die erste distale Stellung wegen des Drucks der Feder (24), und die zweite proximale Stellung durch die Betätigung einer Kraft, die gegen den Druck der Feder (24) betreibt, erreicht.

4. Vorrichtung nach Anspruch 3 **dadurch** gegenzeichnet, daß ein Drehemoment, der an einer Außenverhüllung (12) beantragen ist, eine spiralförmige Bewegung der Verhüllung (12) verursacht, die nach dem Ventil (2) schiebt, wobei das Drehemoment einen Druck von der Wand (27) zur Gruppe (26) gleichzeitig verursacht, die in seiner Umdrehung, die Feder (24) betätigt.

5. Vorrichtung nach Ansprüchen 3 und 4 **dadurch** gegenzeichnet, daß eine Schraubeinrichtung vorgesehen ist, welche die schraubenartige Bewegung und, folglich, die Verschiebung der Außenverhüllung (12) bezüglich auf das Ventil (2) und den verlegten Körper (11, 11a, 11b) in Richtung zum Ventil (2), bewirkt,
außerdem, verursacht die Schraubeinrichtung die Versetzung der Gruppe (26) bis zum Berühren mit dem verlegten Körper (11, 11a, 11b) in Richtung des Ventils (2), d.h. in Richtung der proximalen Stellung und der Öffnung des Nadelventils (2, 5), das durch den Druck des Endes (30) des Gehäuses (31) der Gruppe (26) bewirkt wird.

6. Vorrichtung nach mindestens einem der vorhergehenden Ansprüche **dadurch** gegenzeichnet, daß die Schraubeinrichtung aus ersten Radialvorstehen (17) besteht, die auf einem zylinderförmigen Bestandteil (15) erhalten werden, wobei das zylinderförmige Bauteil (15) zum verlegten Körper (11, 11a, 11b) koaxial ist,
wobei schraubenartige Konture (18) auf den ersten Radialvorstehen (17) erhalten sind, und wobei die Konture (18) auf übereinstimmenden axialen schraubenartigen Konturen (19) aussetzen, die an der Verhüllung (12) fest angeschlossen sind.

7. Vorrichtung nach mindestens einem der vorhergehenden Ansprüche **dadurch** gegenzeichnet, daß Vorderzähne (13), d.h. parallel zur Achse der Vorrichtung, erhalten auf dem externen Umkreis des verlegten Körpers (11), klemmen übereinstimmende axiale Vorderzähne (14), die auf dem zylinderförmigen Bauteil (15) erhalten sind, wobei das Bauteil (15) koaxial zum verlegten Körper (11) ist, und wobei das Bauteil (15) geeignet ist, axial hinsichtlich des verlegten Körpers (11) abwärts zu gleiten, damit das Bauteil (15) vom externen Umkreis des verlegten Körpers (11) und den Vorderzähnen (13) so genug weggeht, daß die übereinstimmenden Vorderzähne (13, 14) frei gemacht werden, während eine Feder (16) das zylinderförmige Bauteil (15) aufwärts leicht stoßt, das neigt, die Vorderzähne (13) in Berührung untereinander zu halten.

8. Vorrichtung nach Anspruch 1 **dadurch** gegenzeichnet, daß eine Dichtung (23) die Verbindung zwischen einem Raum (8) und der Atmosphäre sperrt, wobei der Raum (8) mit dem Reifen verbunden ist, wenn sich die Vorrichtung in der zweiten proximalen Stellung der Gruppe (26) befindet, und wenn der verlegte Körper (11, 11a, 11b) das Ventil (2) klemmt; zum Sperren der Dichtung (23) durch den verlegten Körper (11, 11a, 11b), wird der verlegte Körper (11) bis zum Anschlag auf dem Außengewinde des Ventils (2) eingeschraubt; wobei das Ziel der Dichtung (23) ist, Sicherheitsbedingungen zu versichern.

9. Vorrichtung nach Anspruch 1 **dadurch** gegenzeichnet, daß zweite innenwärts Radialvorstehen (47) weiter in der Verhüllung (12) vorgesehen sind, welche die Gebrauchssicherheit in allen dynamischen Bedingungen versichern, wobei die Radialvorstehen (47) in Richtung der Innenseite des Reifens gedreht sind, und
wobei sich die zweite Radialvorstehen (47) in Kreiskonturen (46), die am verlegten Körper (11) befestigt sind, einmischen, um die axiale Verschiebung der Verhüllung (12) zu hindern, die das Öffnen des Nadelventils (2, 5) in Ermangelung der schraubenartigen Bewegung verursacht; wobei die Verschiebung durch einen Außenzentrifugalkraft verursacht wird, der von der Umdrehung des Rades geschaffen wird.

10. Vorrichtung nach Anspruch 8 **dadurch** gegenzeichnet, daß die geometrischen Merkmale der Schraubeinrichtung die relative Verschiebung der übereinstimmenden axialen schraubenartigen Konturen (18, 19) verhindern, um das rechte Festklemmen der Dichtung (23) zu versichern, wobei das Verhindern dauert, bis zum Klammermoment der Dichtung (23), die an der externen Verhüllung (12) angewendet ist, einen vorbestimmten Schwellwert erreicht, um die korrekte Sperrung der Dichtung (23) zu sichern.

11. Vorrichtung nach Anspruch 8 **dadurch** gegenzeichnet, daß der Schwellwert des Klammermomentes der Dichtung (23), über der die relative Verschiebung der übereinstimmenden axialen schraubenartigen Konturen (18, 19) stattfindet, vom Druck der Feder (24) abhängt, die auf der Gruppe (26) in Richtung der distalen Stellung wirkt, da der Gruppe (26) an die Wand (27) der Verhüllung (12) angelehnt ist.

12. Vorrichtung nach Anspruch 1 **dadurch** gegenzeichnet, daß die Feder (24) mit dem Schraubenwiderstandsmoment des verlegten Körpers (11a) auf dem verlegten Ende (10) des aufblasenden Ventils des Reifens und mit dem von der axialen Pressung der Verdichtung (23) verursachten Widerstandsmoment bearbeitet, die in Widerstand der Geometrie der Schraubeinrichtung und besonders mit der Neigung der axialen schraubenartigen Konture (18, 19) wirken, um einen richtigem Schwellwert des Klammermomentes der Dichtung (23) zu erreichen, so daß es verhindert wird, daß sein Klammer ungenügend ist, und die Dichtung (23) die Dichte nicht verwirklicht, oder das Klammer so übermäßig ist, daß es die Dichtung (23) beschädigt.

13. Vorrichtung nach Anspruch 1 **dadurch** gegenzeichnet, daß die folgenden Glieder vorgesehen sind:
ein elastischer Ring (41), der in der Rille (43) angeordnet ist, wobei sich die Rille (43) im verlegten Körper (11, 11a, 11b) befindet und wobei die Rille (23) so geformt ist, daß der axiale Austritt des Rings (41) verhindert wird,
eine zwischen der Feder (24) und der Gruppe (26) sich befindende Hülse (25), die dritte Radialvorstehen (42) innenwärts aufweist, deren zylindrische Flächen (46) eine Zone beschränken, deren Innendurchmesser kurzer ist, als der Durchmesser des Innenzylinder der Hülse (25),
Radialeinhöhlungen (44), die fähig sind, die dritten Radialvorstehen (42) der Hülse (25) einzuhalten, wenn sich die Gruppe (26) in Richtung der proximalen Stellung bewegt, wobei die dritten Radialvorstehen (42) eine begrenzte Axialausdehnung hinsichtlich des für die Gruppe (26) verfügbaren Hubes, damit sich die Radialvorstehen (42) vom elastischen Ring (41) trennen lassen, wenn sich die Gruppe (26) in der distalen Stellung so befindet, daß die Verschiebung der Gruppe (26) in Richtung der zweiten proximalen Stellung und die Öffnung des Ventils (5, 2) wegen der Wirkung der Axialkomponente des zentrifugalen Krafts hindert, weil das untere Ende (45) von jedem der Radialvorstehen (42) den Ring (41) abfängt, der, in seinem Restzustand, einen externen Durchmesser, der länger ist als jener der zylinderförmigen Oberflächen (46), hat, um die Bewegung fortzusetzen, ist es notwendig, einen zusätzlichen axialen Druck auf die Hülse (25) in Bezug auf jenem auszuüben, der den Druck des Feder (24) übersteigt, wobei der Druck die elastische Widerstand des Ringes (41) überwinden, und seine Durchmesserverminderung verursachen kann, bis zum Durchgang der Radialvorstehen (42) zu erlauben, wobei der so erreichte zusätzliche axiale Druck auf die Hülse (25) die Tätigkeit des axialen Bestandteils des zentrifugalen Krafts auf der Gruppe (26) und auf der Verhüllung (12) übersteigt.

## Revendications

1. Dispositif de surveillance de l'état de déformation radiale d'un pneumatique, la surveillance est obtenue par une mesure de la pression relative du gaz dans le pneumatique,
le dispositif comprend une enveloppe (12) et un corps fileté (11, 11a, 11b) reliés l'un avec l'autre,
un groupe (26) qui se déplace librement et axialement dans l'enveloppe (12) par rapport au corps fileté (11, 11a, 11b),
le groupe (26) comprend au moins un capteur, un amplificateur, un transducteur et un actuateur ;
un ressort (24) qui pousse le groupe (26) vers l'extrémité distale de l'enveloppe (12) par rapport à une soupape de gonflage connue d'un pneumatique qui ne fait pas partie du dispositif ;
des appareils sont contenus à l'intérieur du groupe (26),
les appareils sont aptes à réaliser les fonctions de mesure, amplification et transductions du signal dérivant de la différence entre la pression du gaz contenu à l'intérieur du pneumatique et la pression de l'atmosphère et de signalisation du dépassement du seuil pré-établi,
évaluer l'état de déformation radiale du pneumatique sous chargement, la déformation est proportionnelle à la différence entre la pression du gaz contenu à l'intérieur du pneumatique et la pression atmosphérique.

2. Dispositif selon la revendication 1, **caractérisé en ce que**, afin de signaler à l'extérieur l'état de déformation radiale du pneumatique, le groupe (26) a une première position distale dans laquelle il se trouve à contacte avec une paroi (27) et une seconde position proximale dans laquelle il se trouve loin de la paroi (27); la paroi (27) est réalisé en matériel transparent, et son profil intérieur est formé par des creusements concentriques (38), dont les caractéristiques géométriques en relation à l'index de réfraction du matériel de la paroi (27) déterminent, à la vue de l'extérieur, une coloration neutre lorsque le groupe (26) est loin de la paroi (27), vice versa ils déterminent un ton animé d'un composant (39), qui fait partie du groupe (26), formé avec des protubérances concentriques (40), qui peuvent s'inscrire avec précision dans les creusements (38) de la partie intérieure de la paroi (27) lorsque le groupe (26) est en contact avec la paroi (27).

3. Dispositif selon la revendication 1, **caractérisé en ce que**, afin de signaler à l'extérieur l'état de déformation radiale du pneumatique, le groupe (26) atteint la première position distale sous la poussée du ressort (24) et la seconde position proximale grâce à l'action d'une force externe agissant contre la poussée du ressort (24).

4. Dispositif selon la revendication 3, **caractérisé en ce que** un couple appliqué à l'enveloppe (12) cause un mouvement hélicoïdal de l'enveloppe (12), qui se déplace vers la soupape (2) en exerçant entre-temps une poussée qui se transmette de la paroi (27) ou groupe (26), qui à son tour comprime le ressort (24), la poussée agit comme force extérieure contre le ressort (24).

5. Dispositif selon les revendications 3 et 4, **caractérisé en ce que** un mécanisme à vis est pourvu, qui provoque le mouvement hélicoïdal et donc la translation de l'enveloppe extérieure (12) par rapport à la soupape (2) et au corps fileté (11, 11a, 11b) dans la direction de la soupape (2), le mécanisme provoque même le déplacement du groupe (26) jusqu'à butée sur le corps fileté, c'est-à-dire dans la position proximale, et l'ouverture de l'obturateur (5) de la soupape (2) sous la poussée de l'extrémité (30) du containeur (31) du groupe (26).

6. Dispositif selon au moins une des précédentes revendications, **caractérisé en ce que** le mécanisme à vis est constitué par des premières protubérances radiales (17) qui se trouvent dans un organe cylindrique (15); l'organe cylindrique (15) est coaxial au corps fileté (11, 11a, 11b), des profils hélicoïdaux axiaux (18) sont obtenus sur les premières protubérances radiales (17), les profils hélicoïdaux axiaux (18) s'appuient sur des homologues profils hélicoïdaux axiaux (19), solidaires à l'enveloppe (12).

7. Dispositif selon au moins une des précédentes revendications, **caractérisé en ce que** des dents frontales(13), c'est-à-dire parallèles à l'asse du dispositif, obtenus sur la circonférence extérieure du corps fileté (11), engagent des dents frontales, axiales homologues (14) qui se trouvent sur l'organe cylindrique (15) coaxial au corps fileté et capable de glisser axialement par rapport à ce dernier vers le bas, l'organe cylindrique (15) s'éloigne de la circonférence extérieure du corps fileté (11) et des dents frontales(13) d'une quantité suffisante à faire dégager les dents homologues (13, 14), pendant qu'un ressort (16) pourvoit à exercer une légère poussée vers le haut sur l'organe cylindrique (15) qui tend à maintenir les dents (13), (14) en contacte entre eux.

8. Dispositif selon la revendication 1, **caractérisé en ce que**, une garniture (23) ferme la communication entre une chambre (8) qui communique avec le pneumatique lorsque le dispositif est dans la deuxième position proximale du groupe (26) et avec l'atmosphère lorsque le corps fileté (11, 11a, 11b) est serré sur la soupape (2); pour serrer la garniture (23) par le corps fileté (11, 11a, 11b) le corps fileté est vissé sur le filet extérieur (10) de la soupape à pointeau (2); la garniture (23) sert à assurer les conditions de sûreté.

9. Dispositif selon la revendication 1, **caractérisé en ce que**, pour assurer la sûreté d'emploi dans toutes les conditions dynamiques des secondes protubérances radiales (47) sont pourvues, qui sont dirigées vers l'intérieur du pneumatique, les secondes protubérances radiales (47) interfèrent avec des profils périphériques (46) solidaires au corps fileté (11, 11a, 11b) pour empêcher la translation axiale de l'enveloppe (12), qui cause l'ouverture de la soupape à pointeau (2, 5), en absence du mouvement hélicoïdal; la translation est due à une force extérieure centrifuge causée par la rotation de la roue.

10. Dispositif selon la revendication 8, **caractérisé en ce que**, pour assurer le correct serrage de la garniture (23), les caractéristiques géométriques du mécanisme à vis empêchent le coulissement relatif des homologues profils hélicoïdaux axiaux (18, 19) jusqu'à la couple de serrage de la garniture (23) appliquée à l'enveloppe extérieure (12) rejoint un seuil préfixé.

11. Dispositif selon la revendication 8, **caractérisé en ce que** la valeur du seuil de la couple de serrage de la garniture (23), au delà de laquelle le coulissement relatif des homologues profils hélicoïdaux (18, 19) se produit, dépend de la poussée du ressort (24) vers la première position distale qui agit sur le groupe (26) puisque le groupe (26) est appuyé à la paroi (27) de l'enveloppe (12).

12. Dispositif selon la revendication 1, **caractérisé en ce que** le ressort (24) coopère avec la couple résistante de vissage du corps fileté (11a) sur l'extrémité filetée (10) de la soupape à pointeau du pneumatique et avec la couple résistante due à la compression axiale de la garniture (23), les deux couples résistantes agissent en opposition avec la géométrie du mécanisme à vis et en particulier avec l'inclination des profils hélicoïdaux axiaux (18, 19), pour obtenir une valeur correcte de seuil de la couple de serrage de la garniture (23) et pour empêcher que son serrage soit insuffisant, et la garniture (23) n'obtienne pas l'étanchéité, ou que le serrage soit excessif et il endommage la garniture (23).

13. Dispositif selon la revendication 1, **caractérisé en ce que** les suivants éléments sont pourvus:
un anneau élastique (41) logé dans la rainure (43) obtenue sur le corps fileté (11, 11a, 11b), la rainure est formée de façon d'empêcher la sortie axiale de l'anneau (41),
un manchon (25) logé entre le ressort (24) et le groupe (26), le manchon (25) présente troisièmes protubérances radiales (42) adressées vers l'intérieur du pneumatique, les surfaces cylindriques (46) desquelles délimitent une zone de diamètre intérieur inférieur à celui du cylindre intérieur du manchon (25),
des enfoncements radiaux (44) aptes à loger les troisièmes protubérances radiales (42) du manchon (25) lorsque le groupe (26) se déplace vers la position proximale, les troisièmes protubérances radiales (42) ont une extension axiale limitée par rapport à la course disponible pour le groupe (26) pour permettre aux protubérances de se dégager de l'anneau élastique (41) lorsque le groupe (26) est dans la position distale, de façon d'entraver le déplacement du groupe (26) vers la deuxième position proximale et aussi l'ouverture de la soupape à pointeau (2, 5) sous l'action de la composante axiale de la force centrifuge grâce au fait que l'extrémité inférieure (45) de chaque protubérance radiale (42) intercepte l'anneau (41),
l'anneau (41), en condition de repos, a un diamètre extérieur plus long que celui des surfaces cylindriques (46),
pour poursuivre le déplacement, il est nécessaire appliquer sur le manchon (25) une poussée axiale supplémentaire par rapport à celle nécessaire à dépasser la poussée du ressort (24), cette poussée axiale supplémentaire sur le manchon (25) aussi obtenue est supérieure à l'action de la composante axiale de la force centrifuge sur le groupe (26) et sur l'enveloppe (12).
